# EUROPEAN PATENT APPLICATION

(11) **EP 4 155 351 A1**
(43) Date of publication of application: **29.03.2023**
(21) Application number: 22193784.0
(22) Date of filing: 02.09.2022
(51) Int. Cl.: C09D 5/08, C09D 7/61, C09D 183/00, C08K 3/10, C08K 3/22

(54) **ANTI-CORROSION COATING**

(30) Priority: 28.09.2021 US 202117487507
(71) Applicant: General Electric Company, Schenectady, NY 12345 (US)
(72) Inventor: NAGESH, Mamatha, 560066 Bangalore (IN); SAHA, Atanu, 560066 Bangalore (IN); SWAMINATHAN, Srinivasan, 560066 Bangalore (IN)
(74) Representative: Openshaw & Co.

(57) **Abstract**

A corrosion resistant coating (64), including a matrix (63); corrosion resistant particles (65) dispersed throughout the matrix (63); and a glass-forming additive is disclosed. The glass-forming additive and one or more materials in the matrix (63) form a glassy-phase when cured.

## Description

### FIELD OF TECHNOLOGY

The present disclosure relates generally to anti-corrosion coatings for substrates. For example, certain aspects of the present disclosure are directed to coatings for inhibiting corrosion of high temperature components, such as gas turbine components.

### BACKGROUND

The operating environment within a gas turbine engine is both thermally and chemically hostile. Although high temperature iron, nickel and cobalt-based superalloys have been developed for engine components, components formed from such alloys often cannot withstand long service exposures if located in certain sections of a gas turbine engine, such as the turbine and/or combustor sections. Hot corrosion of gas turbine engine components generally occurs when sulfur compounds and/or dust attacks the components' surfaces. Sources of sulfur compounds include fuel and ingestion from environment. Dust predominately comes from environment ingestion. The presence of corrosive compounds and/or dust is responsible for corrosion of hot section components like compressors or disks. Therefore, improved anti-corrosion coatings are needed.

### BRIEF DESCRIPTION

Aspects and advantages will be set forth in part in the following description, or may be obvious from the description, or may be learned through practice of the present disclosure.

In one exemplary embodiment of the present subject matter, a corrosion resistant coating is provided. The coating includes a matrix, corrosion resistant particles dispersed throughout the matrix, and a glass-forming additive. One or more materials in the matrix and the glass-forming additive form a glassy-phase when cured.

In another exemplary embodiment of the present subject matter, a corrosion resistant gas turbine engine component is provided. The turbine engine component has a corrosion resistant coating disposed thereon. The corrosion resistant coating includes a matrix, corrosion resistant particles dispersed throughout the matrix, and a glass-forming additive. One or more materials in the matrix and the glass-forming additive form a glassy-phase when cured.

In yet another exemplary embodiment of the present subject matter, a method for coating a metal component is provided. The method includes disposing a coating composition on a surface of the metal component. The coating composition includes a matrix material; corrosion resistant particles; and a glass-forming additive. The method includes curing the coating composition to form a coated metal component. Upon curing, the glass-forming additive and one or more materials in the matrix material form a glassy-phase.

These and other features, aspects and advantages will become better understood with reference to the following description and appended claims. The accompanying drawings, which are incorporated in and constitute a part of this specification, illustrate embodiments of the present disclosure and, together with the description, serve to explain certain principles of the present disclosure.

### BRIEF DESCRIPTION OF THE DRAWINGS

A full and enabling disclosure of the present disclosure, including the best mode thereof, directed to one of ordinary skill in the art, is set forth in the specification, which makes reference to the appended Figs., in which:
FIG. 1 is a cross-sectional view of a portion of the turbine section of a gas turbine engine according to example embodiments of the present disclosure;
FIG. 2 is a perspective view of a turbine disk, as viewed from the front or fan portion of the engine in the direction of gas flow, showing where the corrosion resistant coating can be located according to example embodiments of the present disclosure;
FIG. 3 is a cross-sectional representation of a corrosion resistant coating applied to a substrate component according to example embodiments of the present disclosure; and
FIG. 4 is a flowchart of a method of coating an article according to example embodiments of the present disclosure.

Repeat use of reference characters in the present specification and drawings is intended to represent the same or analogous features or elements of the present disclosure.

### DETAILED DESCRIPTION OF PARTICULAR EMBODIMENTS

Reference now will be made in detail to embodiments of the present disclosure, one or more examples of which are illustrated in the drawings. Each example is provided by way of explanation of the present disclosure, not limitation of the invention. In fact, it will be apparent to those skilled in the art that various modifications and variations can be made in the present invention without departing from the scope of the present disclosure. For instance, features illustrated or described as part of one embodiment can be used with another embodiment to yield a still further embodiment. Thus, it is intended that the present disclosure covers such modifications and variations as come within the scope of the appended claims and their equivalents.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a", "an", and "the" include plural references unless the context clearly dictates otherwise.

As used herein, the terms "first", "second", and "third" may be used interchangeably to distinguish one component from another and are not intended to signify location or importance of the individual components.

As used herein, the term "substantially free" is understood to mean completely free of said constituent, or inclusive of trace amounts of same. "Trace amounts" are those quantitative levels of chemical constituent that are barely detectable and provide no benefit to the functional or aesthetic properties of the subject composition. As used herein, the term "chromate" refers to chromate ion, dichromate ion, and any other form of hexavalent chromium.

Approximating language, as used herein throughout the specification and claims, is applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 1, 2, 4, 10, 15, or 20 percent margin. These approximating margins may apply to a single value, either or both endpoints defining numerical ranges, and/or the margin for ranges between endpoints.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

This disclosure relates to a corrosion resistant coating composition including a particulate corrosion resistant component, a glass-forming matrix component, and a glass-forming additive. This disclosure also broadly relates to a gas turbine engine component coated with at least one layer of the corrosion resistant coating composition. A method for coating the component with the corrosion resistant coating is also provided.

Turbine engine components for use at the highest operating temperatures are typically made of superalloys of iron, nickel, cobalt or a combination thereof, or other corrosion resistant materials such as stainless steels selected for good, elevated temperature toughness and fatigue resistance. Illustrative superalloys are designated by such trade names as Inconel^{®}, for example, Inconel^{®} 600, Inconel^{®} 722 and Inconel^{®} 718, Nimonic^{®}, Rene^{®}, for example, Rene^{®} 65, Rene^{®} 88DT, Rene^{®} 104, Rene^{®} 95, Rene^{®} 100, Rene^{®} 80 and Rene^{®} 77, and Udimet^{®}, for example, Udimet^{®} 500, Hastelloy, for example, Hastelloy X, HS 188 and other similar alloys. These materials have resistance to oxidation and corrosion damage, but that resistance is generally not sufficient to protect them at sustained operating temperatures now being reached in gas turbine engines. Engine components, such as disks and other rotor components, are made from newer generation alloys that contain lower levels of chromium, and can therefore be more susceptible to corrosion attack. These engine components include turbine disks, turbine seal elements, turbine shafts, airfoils categorized as either rotating blades or stationary vanes, turbine blade retainers, center bodies, engine liners, flaps, and spools. Engine components could also include spools (e.g., compressor spools) and other compressor components, especially those components in the high pressure turbine and/or compressor section. This list is exemplary and not meant to be inclusive.

While all of the above listed components may find advantage for the present disclosure, engine components such as the turbine disks, turbine seal elements and turbine shafts are not directly within the gas path of the products of combustion, and are not typically identified with corrosive products experienced as a result of exposure to these highly corrosive and oxidative gases. Nevertheless, these components have experienced higher operating temperatures and are experiencing greater corrosion effects as a result of these higher operating temperatures.

Accordingly, anti-corrosion coating systems and coatings have been developed for protecting these components from oxidation and hot corrosion. The present disclosure is directed to a coating comprising a matrix, corrosion resistant particles, and a glass-forming additive. Advantageously, the inclusion of the glass-forming additive facilitates the formation of glass during curing of the applied coating or use of the coated component, which provides improved binding strength of the coating to components at high temperatures. Such improved binding strength of the present coating eliminates the need for additional sealant coats or top-coats. Furthermore, the present coating is free from harmful chromium-based materials, (e.g., hexavalent chromium) and is compliant with Registration, Evaluation, Authorisation, and Restriction of Chemicals "REACH" regulations.

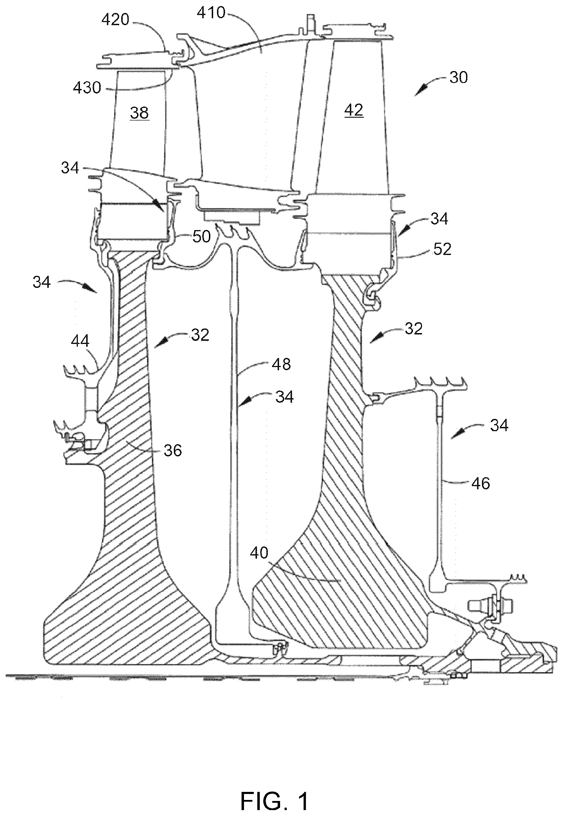

FIG. 1 is a cross-sectional view depicting a portion of the turbine section of a gas turbine engine along the centerline of the engine. The turbine section 30, shown, is a two stage turbine, although any number of stages may be employed depending on the turbine design. The present disclosure is not limited by the number of stages in the turbine shown. Turbine disks 32 are mounted on a shaft (not shown) extending through a bore in turbine disks 32 along the centerline of the engine, as shown. A first stage turbine blade 38 is attached to first stage disk 36, while second stage turbine blade 42 is attached to second stage disk 40. A vane 410 extends from a casing 420. The inner surface of casing 420 forms a liner 430 for the hot gases of combustion that flow in the gas flow path. The first stage turbine blade 38, the second stage turbine blade 42 and the vane 410 extend into the hot gas flow path. The vane 410 is stationary and serves to direct the hot gas flow while turbine blades 38, 42 mounted on disks 36, 40 rotate as the hot gases impinge on them, extracting energy to operate the engine.

Sealing elements 34, include a forward seal 44, an aft seal 46, an interstage seal 48. The sealing elements 34 along with a stage 1 aft blade retainer 50 and a stage 2 aft blade retainer 52, serve to seal and complete the compressor air cooling circuits to the turbine blades and nozzles. These sealing elements 34 are in contact with the disks 36,40 and rotate with the disks 36,40. Interstage seal 48 is positioned inboard of vane 410 and between the first stage disk 36 and the second stage disk 40. Also shown are optional aft blade retainers 50, 52 that lock the blades 38,42 to the disks 36,40, respectively. The design of such retainers will vary dependent on engine design, with some engine designs not requiring them.

These sealing elements 34 and aft blade retainers 50,52 are heated to the temperatures of the cooling circuit air they direct. In addition, the parts closest to the combustion path are also heated by conductive heat transfer from the combustion path parts. For example, the rim of the turbine disks 36,40 are conductively heated by the turbine blades 38, 42. Contaminants in the cooling air deposit on the surfaces of the disks 36,40, sealing elements 34, and aft blade retainers 50,52 that form the cooling cavities and are the source of contamination at elevated temperatures.

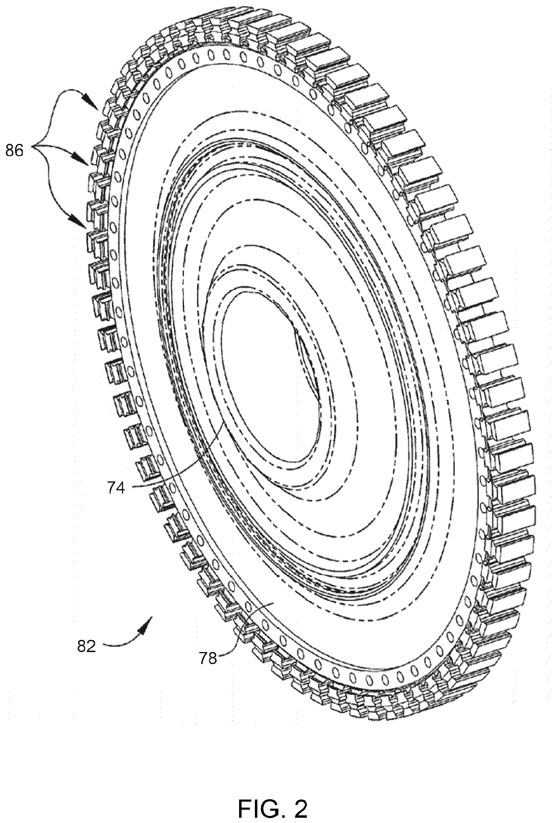

FIG. 2 is a perspective view of a gas turbine engine disk 82, such as first stage disk 36 or second stage disk 40 of FIG. 1, which is typically made of a superalloy material, such as one of the superalloy materials previously discussed. The disk 82 includes a hub 74 along typically the engine centerline that includes a bore through which a shaft (not shown) extends. The disk includes dovetail slots 86 along the disk outer periphery into which the turbine blades (e.g., turbine blades 38,42 from FIG. 1) are inserted. A web section 78 of the disk 82 extends between the outer periphery, where the dovetail slots are located, and the hub 74. While the disclosed coating, including the glass-forming matrix including silica, corrosion resistant particles, and glass-forming additive, may be utilized anywhere along disk 82, including the dovetail slots 86, it finds particular use along the surfaces of web section 78 and the dovetail slots 86, which unlike the bore in hub 74, are directly exposed to the high temperature cooling air.

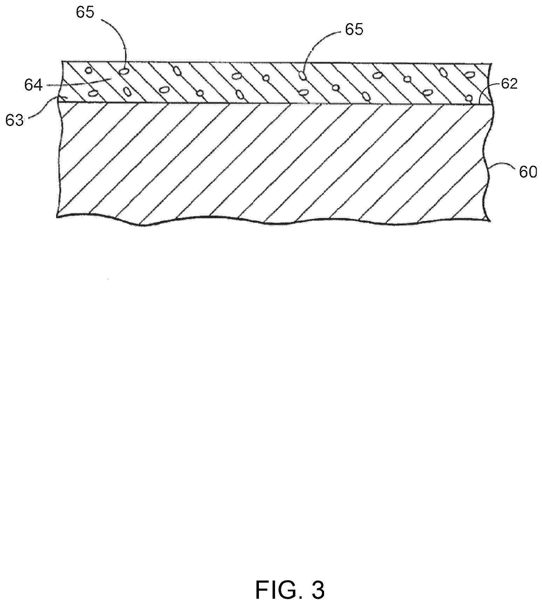

FIG. 3 depicts, in cross-section, the coating of the present disclosure deposited on an engine component. Corrosion resistant coating 64 is deposited on the surface 62 of substrate 60. The substrate 60 may be any component used in a gas turbine engine, such as a turbine engine disks, blades, and/or retainers as described hereinabove. The surface 62 can be any surface of an engine component, for example, the surface 62 can be a web section of a turbine disk (as shown in FIG. 2). The substrate 60 comprises a superalloy based on nickel, cobalt, iron or a combination thereof. The corrosion resistant coating 64 includes one or more corrosion resistant particles 65 dispersed throughout a matrix 63.

Matrix forming materials preferably comprise a silicon-based material, silicone-based material, or a combination thereof. In certain embodiments, the matrix forming material contains silica. For example, silicone resins can be used, such as those with high ceramic yield, including polycarbosilane-based resins, polysilazane-based resins, polysilane-based resins, poly siloxane based resins, or combinations thereof. Commercially available resins such as SR 350^{™} available from Arkema^{®} S.A., and DOWSIL^{™} RSN-0249 Flake Resin available from Dow^{®} Chemical, can also be used.

Optionally, additional phosphate binder materials can be added. The phosphate binders can be in the form of phosphoric acid or more typically the respective phosphate compounds/compositions, including orthophosphates, pyrophosphates, and other phosphate compounds. These phosphate compounds/compositions can be monobasic, dibasic, tribasic or any combination thereof. The phosphate-containing binder component can optionally comprise other binder material, including one or more chromates, molybdates, or similar binder material. In certain embodiments, the matrix material is substantially free of chromates, including hexavalent chromium.

Corrosion resistant particles are combined with the matrix forming material to form a coating composition. For example, corrosion resistant particles can be combined with the matrix forming material and formed into a slurry, which will be discussed in more detail below. The corrosion resistant particles may include refractory oxide particles that can impart corrosion resistance to the coating, such as alumina (Al₂O₃), yttrium oxide (Y₂O₃), zirconium oxide (ZrO₂), titanium oxide (TiO₂) or a combination thereof. While oxides of other metals may be used, such as tungsten, chromium and rhenium, these are less preferred as they are not deemed to be as environmentally friendly as the refractory oxides. In certain embodiments, the corrosion resistant particles include MCrAlX, MCr, MAl, MCrX, or MAlX particles, where M is an element selected from nickel, iron, cobalt, or a combination thereof and X is an element selected from the group consisting of La, Ta, Re, Y, Zr, Hf, Si, B, C or a combination thereof. The corrosion resistant particles including MCrAlX, MCr, MAI, MCrX, or MAlX particles may be added to the coating, either alone or in combination with the refractory oxide particles. For example, in one embodiment, the coating includes CoNiCrAlY particles in combination with zirconia particles. The dispersed zirconia particles and the CoNiCrAlY particles provide the coating with corrosion resistance.

In embodiments, the corrosion resistant particles can include a plurality of particles having a multimodal distribution. For example, the corrosion resistant particles include a plurality of small particles having a median particle size of less than 1 micron, a plurality of medium particles having a particle size of between 2 microns and 8 microns, and a plurality of large particles having a particle size of between 9 microns and 60 microns. The plurality of small particles is present in an amount of from about 10 volume % to about 30 volume %, the plurality of medium particles is present in an amount of from about 30 volume % to about 50 volume %, and the plurality of large particles is present in an amount of from about 30 volume % to about 50 volume%.

A glass-forming additive is also combined with the matrix material and corrosion resistant particles. Specifically, the glass-forming additive reacts with one or more of the matrix materials (e.g., silicon species such as silica) to facilitate glass formation during heat treatment of the component. Suitable heat treatments include curing, sintering, or use of the coated component. As previously stated, facilitation and formation of a glassy-phase in the coating provides improved binding strength at high temperatures. Advantageously, use of one or more glass-forming additives to form a glassy-phase in the coating diminishes the need for additional sealing top-coats or other coating layers. Furthermore, formation of the glassy-phase improves adhesion strength of the coating. The glass-forming additive can include oxides such as iron oxide, gallium oxide, manganese oxide, aluminum oxide, nickel oxide, titanium oxide, boron oxide, alkaline earth oxides, or a combination thereof. The glass-forming additive can also include iron, aluminum, nickel, alloys thereof, or a combination thereof. In certain embodiments, the glass-forming additive includes boron, such as elemental boron, an unoxidized boron in a boron alloy or compound, or a combination thereof. In embodiments wherein the glass-forming additive includes boron, boron and silicon species (e.g., silica) can react to form a silica-rich or borosilicate-rich glass when cured or heated.

The glass-forming additive can include a powder having plurality of particles. Generally, the particles of the glass-forming additive are selected such that the overall particle size distribution of the glass-forming additive particles are much smaller than the corrosion resistant particles. For example, in embodiments the glass-forming additive can include a plurality of particles having particle sizes in the range of from about 50 nm to about 200 nm.

When formulated as a slurry, the glass-forming additive is present in the slurry in an amount of from about 0.01wt.% to about 0.07wt.%, such as about 0.05wt.% based on the total weight of the slurry.

Advantageously, the components (e.g., the matrix, corrosion resistant particles, and glass-forming additive) utilized to form the coating disclosed herein are substantially free from harmful chromates, such as hexavalent chromium.

In embodiments, a nucleating agent may also be present in the coating slurry. Components coated with certain glass matrix particulate composite coatings can operate at temperatures lower than glass transition temperature. Glass transition temperature is the temperature where the macro-mobility of glass structure is observed. Normally, the glass transition temperature is lower than the glass melting (formation) temperature. Therefore, the operating temperature of the coated components is restricted well below the processing temperature of the coating. Interaction of nucleating agents with the glass matrix leads to the formation of nanocrystalline structures throughout the glass matrix. Formation of such nanocrystalline structures allows the coating to be used on components subjected to higher service temperatures, as the melting temperatures of these crystalline phases are higher than amorphous phases of similar compositions. In some cases, due to crystallinity in the glass as result of adding the nucleating agent, operating temperatures may well exceed the processing temperature of the coating. Exemplary materials suitable for use as nucleating agents include noble metals, such as ruthenium (Ru), rhodium (Rh), palladium (Pd), silver (Ag), osmium (Os), iridium (Ir), platinum (Pt) and gold (Au), fluorides, titanium dioxide, phosphorus pentoxide, chromium (III) oxide, or a combination thereof. This list is exemplary only and any other known, suitable nucleating agents can be used in accordance with the present disclosure.

As noted, the matrix forming material, corrosion resistant particles, and glass-forming additive can be combined and dispersed in a carrier fluid to form a slurry. The slurry viscosity can then be adjusted by either adding liquid or adding additional particles to the mixture. For example, one or more viscosity modifiers can be added to the slurry. Suitable viscosity modifiers include polyethylene glycol (PEG), dimethylsiloxane, silicone oil, phthalates, adipates, glycerin, or a combination thereof. The viscosity should be adjusted, if required, to be consistent with the intended method of application. For example, if the slurry is to be sprayed, the viscosity should be adjusted to be very low, whereas if the slurry is to be applied as a gel, using, for example, a doctor blade to adjust the thickness, then liquid should be removed so that the slurry does not flow readily. Even more liquid should be removed if the slurry is to be formed into a tape. In the last two examples, the final viscosity adjustment may be made after mixing is complete. Regardless of the intended method of application, the mixture is thoroughly agitated. Agitation can be accomplished by any convenient method. Optionally, surfactants and dispersants may also be added to the slurry depending on the method of application.

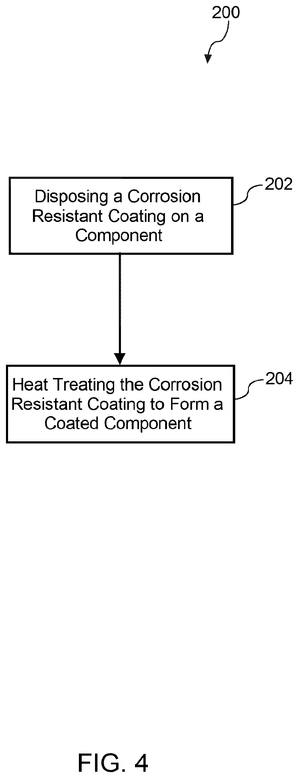

FIG. 4 illustrates a flowchart for a method (200) of coating a metal component with the corrosion resistant coating disclosed herein. At (202), the method includes disposing a corrosion resistant coating on the surface of a metal component. The coating includes a matrix, corrosion resistant particles, and glass-forming additive. The coating may be applied by any known coating technique, including, but not limited to brushing, rolling, spraying, and dipping.

In certain embodiments, the corrosion resistant coating is disposed by spraying. For example, a coating slurry can be sprayed onto a surface of the component. As previously described, the viscosity of the coating slurry can be adjusted so that the coating can easily be sprayed. In such embodiments, the slurry is continuously agitated by placing it on a ball mill until it is ready for application. Even as the slurry is sprayed, the slurry can be pneumatically agitated by using a pot on a spray gun. The slurry can be applied using a spray gun having an adjustable orifice. The orifice size should be larger than the largest particles in the slurry. The slurry is sprayed at a pressure of about 20-60 psi. The corrosion resistant coating is applied to a preselected thickness, with a larger orifice being selected when a thicker coating is desired. The corrosion resistant coating can be applied at a coating thickness of from about 50 µm to about 1,000 µm, such as from about 100 µm to about 950 µm, such as from about 150 µm to about 900 µm, such as from about 200 µm to about 850 µm, such as from about 250 µm to about 800 µm, such as from about 300 µm to about 750 µm, such as from about 350 µm to about 700 µm, such as from about 400 µm to about 650 µm, such as from about 450 µm to about 600 µm. The coating can be applied to such thicknesses as a single layer, or can be applied as a plurality of distinct layers to achieve an overall thickness in these ranges.

Optionally, prior to applying the corrosion resistant coating on the surface of the metal component, the metal component can be pretreated mechanically, chemically, or both to make the surface more receptive for the corrosion resistant coating. Suitable pretreatment methods include grit blasting, with or without masking of surfaces that are not to be subjected to grit blasting, micromachining, shot peening, laser etching, treatment with chemical etchants such as those containing hydrochloric acid, hydrofluoric acid, nitric acid, ammonium bifluorides and mixtures thereof, treatment with water under pressure (i.e., water jet treatment), with or without loading with abrasive particles, as well as various combinations of these methods. Typically, the surface of the metal component is pretreated by grit blasting where the surface is subjected to the abrasive action of silicon carbide particles, steel particles, alumina particles or other types of abrasive particles. These particles used in grit blasting are typically alumina particles and typically have a particle size from about 600 to about 35 mesh (from about 25 to about 500 micrometers), more typically from about 360 to about 35 mesh (from about 35 to about 500 micrometers). Other suitable pretreatment methods can include shot-peening and/or laser shock peening. One or more pretreatment methods can be utilized. For example, certain embodiments can include pretreating the surface via shot-peening followed by grit blasting.

Optionally, after the coating slurry is applied to the surface of the component, it is allowed to dry. Drying can be accomplished via any suitable method. Drying can remove unbound water or provide solvent evaporation from the applied slurry coating. Drying can take place at ambient temperature or the article can be placed in an oven and dried at a temperature greater than ambient. In other embodiments, the environmental humidity may be adjusted to facility drying of the slurry. For example, in embodiments the coated component can be heated to a temperature of 100°C for about 60 minutes to dry the applied coating.

At (204), the coating is heat treated. Suitable heat treatments include curing, sintering, or use of the coated component at an elevated temperature. For example, the coating component can be heated to drive off unbound water and to cure the coating. Alternatively, heat can be applied to the surface of the coated component to cure the coating or facilitate curing of the coating. For example, heat may be applied to the surface to decrease the time required to cure. In certain embodiments, the coated component can be heated to a temperature of about 800°C or greater for time period of from about 30 minutes to 90 minutes, such as about 60 minutes to cure the coating. Further, the coated component can be subjected to more than one curing treatment or heat treatment. Additionally, heating or curing the coated component can take place in situ, such as during operation of the part, facilitating on-wing repair. For example, the coating can be subjected to an initial treatment prior to use to dry and/or partially cure the coating, and the curing process is completed while the component is in use in an elevated temperature environment. A component in the turbine section of a turbine engine, for example, may experience elevated temperatures sufficient to complete curing of the coating during the first engine cycle following engine service.

Further aspects of the present disclosure are provided by the subject matter of the following clauses:

A corrosion resistant coating, comprising: a matrix; corrosion resistant particles dispersed throughout the matrix; and a glass-forming additive, wherein the glass-forming additive and one or more materials in the matrix form a glassy-phase when heat treated.

The coating of any preceding clause, wherein the corrosion resistant particles comprise Al₂O₃, Y₂O₃, ZrO₂, TiO₂, or a combination thereof.

The coating of any preceding clause, wherein the corrosion resistant particles comprise MAl particles, MAlX particles, MCr particles, MCrX particles, MCrAlX particles, or a combination thereof, where M is an element selected from nickel, iron, cobalt, or a combination thereof and X is an element selected from La, Ta, Re, Y, Zr, Hf, Si, B, C, or a combination thereof.

The coating of any preceding clause, wherein the matrix comprises a silicon-based matrix, a silicone-based matrix, or a combination thereof.

The coating of any preceding clause, wherein the glass-forming additive comprises one or more metals or oxides of iron, one or more metals or oxides of aluminum, one or more metals or oxides of boron, one or more metals or oxides of nickel, or a combination thereof.

The coating of any preceding clause, further comprising a nucleating agent.

The coating of any preceding clause, wherein the coating is substantially free of hexavalent chromium.

The coating of any preceding clause, further comprising a silicone-based sealant layer, wherein the silicone-based sealant layer is substantially free of the corrosion resistant particles.

The coating of any preceding clause, wherein the corrosion resistant particles comprise a plurality of small particles having a median particle size of less than 1 micron, a plurality of medium particles having a particle size of between 2 microns and 8 microns, and a plurality of large particles having a particle size of between 9 microns and 60 microns, wherein the plurality of small particles is present in an amount of from about 10 volume % to about 30 volume %, the plurality of medium particles is present in an amount of from about 30 volume % to about 50 volume %, and the plurality of large particles is present in an amount of from about 30 volume % to about 50 volume%.

A corrosion resistant gas turbine engine component, comprising a turbine engine component having a corrosion resistant coating disposed thereon, the corrosion resistant coating comprising: a matrix; corrosion resistant particles dispersed throughout the matrix; and a glass-forming additive, wherein the glass-forming additive reacts with one or more materials in the matrix to form a glassy-phase when heat treated.

The component of any preceding clause, wherein the corrosion resistant particles comprise Al₂O₃, Y₂O₃, ZrO₂, TiO₂, or a combination thereof.

The component of any preceding clause, wherein the corrosion resistant particles comprise Mal particles, MAlX particles, MCr particles, MCrX particles, MCrAlX particles, or a combination thereof, where M is an element selected from nickel, iron, cobalt or a combination thereof and X is an element selected from La, Ta, Re, Y, Zr, Hf, Si, B, C, or a combination thereof.

The component of any preceding clause, wherein the matrix comprises a silicon-based matrix, a silicone-based matrix, or a combination thereof.

The component of any preceding clause, wherein the glass-forming additive comprises one or more metals or oxides of iron, one or more metals or oxides of aluminum, one or more metals or oxides of boron, one or more metals or oxides of nickel, or a combination thereof.

The component of any preceding clause, wherein the corrosion resistant coating further comprises a nucleating agent.

The component of any preceding clause, wherein the coating is substantially free of hexavalent chromium.

The component of any preceding clause, wherein the corrosion resistant particles comprise a plurality of small particles having a median particle size of less than 1 micron, a plurality of medium particles having a particle size of between 2 microns and 8 microns, and a plurality of large particles having a particle size of between 9 microns and 60 microns, wherein the plurality of small particles is present in an amount of from about 10 volume % to about 30 volume %, the plurality of medium particles is present in an amount of from about 30 volume % to about 50 volume %, and the plurality of large particles is present in an amount of from about 30 volume % to about 50 volume%.

The component of any preceding clause, wherein the gas turbine engine component comprises a nickel-based alloy, a cobalt-based alloy, or a combination thereof.

The component of any preceding clause, wherein the gas turbine engine component comprises a compressor spool, turbine disk, seal, or shaft.

A method for coating a metal component comprising: disposing a coating composition on a surface of the metal component, the coating composition comprising: a matrix material; corrosion resistant particles; and a glass-forming additive; and heat treating the coating composition to form a coated metal component, wherein the glass-forming additive and one or more materials in the matrix material react during heat treating to form a glassy-phase.

This written description uses exemplary embodiments to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A corrosion resistant coating (64), comprising:
a matrix (63);
corrosion resistant particles (65) dispersed throughout the matrix (63); and
a glass-forming additive, wherein the glass-forming additive and one or more materials in the matrix (63) form a glassy-phase when cured.

2. The coating of claim 1, wherein the corrosion resistant particles (65) comprise Al₂O₃, Y₂O₃, ZrO₂, TiO₂, or a combination thereof.

3. The coating of any preceding claim, wherein the corrosion resistant particles (65) comprise MAl particles, MAlX particles, MCr particles, MCrX particles, MCrAlX particles, or combinations thereof, where M is an element selected from nickel, iron, cobalt, and combinations thereof and X is an element selected from La, Ta, Re, Y, Zr, Hf, Si, B, C, and combinations thereof.

4. The coating of any preceding claim, wherein the matrix (63) comprises a silicon-based matrix, a silicone-based matrix, or a combination thereof.

5. The coating of any preceding claim, wherein the glass-forming additive comprises one or more metals or oxides of iron, one or more metals or oxides of aluminum, one or more metals or oxides of boron, one or more metals or oxides of nickel, or a combination thereof.

6. The coating of any preceding claim, further comprising a nucleating agent.

7. The coating of any preceding claim, wherein the coating (64) is substantially free of hexavalent chromium.

8. The coating of any preceding claim, further comprising a silicone-based sealant layer, wherein the silicone-based sealant layer is substantially free from the corrosion resistant particles (65).

9. The coating of any preceding claim, wherein the corrosion resistant particles (65) comprise a plurality of small particles having a median particle size of less than 1 micron, a plurality of medium particles having a particle size of between 2 microns and 8 microns, and a plurality of large particles having a particle size of between 9 microns and 60 microns, wherein the plurality of small particles is present in an amount of from about 10 volume % to about 30 volume %, the plurality of medium particles is present in an amount of from about 30 volume % to about 50 volume %, and the plurality of large particles is present in an amount of from about 30 volume % to about 50 volume%.

10. A corrosion resistant gas turbine engine component, comprising:
a turbine engine component having a corrosion resistant coating (64) disposed thereon, the corrosion resistant coating (64) comprising:
a matrix (63);
corrosion resistant particles (65) dispersed throughout the matrix (63); and
a glass-forming additive, wherein the glass-forming additive reacts with one or more materials in the matrix (63) to form a glassy-phase when cured.

11. The component of claim 10, wherein the corrosion resistant particles (65) comprise Al₂O₃, Y₂O₃, ZrO₂, TiO₂, or a combination thereof.

12. The component of claim 10 or 11, wherein the corrosion resistant particles (65) comprise Mal particles, MAlX particles, MCr particles, MCrX particles, MCrAlX particles, or a combination thereof, where M is an element selected from nickel, iron, cobalt and combinations thereof and X is an element selected from La, Ta, Re, Y, Zr, Hf, Si, B, C, or a combination thereof.

13. The component of any of claims 10 to 12, wherein the matrix (63) comprises a silicon-based matrix, a silicone-based matrix, or a combination thereof.

14. The component of any of claims 10 to 13, wherein the glass-forming additive comprises one or more metals or oxides of iron, one or more metals or oxides of aluminum, one or more metals or oxides of boron, one or more metals or oxides of nickel, or a combination thereof.

15. The component of any of claims 10 to 14, wherein the coating is substantially free of hexavalent chromium.
